# EUROPEAN PATENT SPECIFICATION

(11) **EP 0 733 638 B1**
(45) Date of publication and mention of the grant of the patent: **22.08.2001**
(21) Application number: 95104093.0
(22) Date of filing: 20.03.1995
(51) Int. Cl.: C07F 9/09, D06M 13/292, D06M 13/288, C07F 9/12, C07F 9/40

(54) **Use of phosphoryl compounds for the flame retardant finishing of polyester-based synthetic fibre materials**
Verwendung von Phosphorylverbindungen für das flammhemmende Veredeln von synthetischen Fasermaterialen auf der Basis von Polyestern
Utilisation des composés phosphorylés pour le finissage ignifugeant de matériaux fibreux synthétiques à base de polyesters

(43) Date of publication of application: 25.09.1996
(73) Proprietor: NICCA CHEMICAL CO., LTD., Fukui-shi Fukui-ken (JP); KANEBO LTD., Tokyo (JP)
(72) Inventor: Sano, Junji, Amagasaki-shi, Hyogo (JP); Ichihashi, Kunio, Hirakata-shi, Osaka (JP); Saito, Hajime, Sabae-shi, Fukui (JP); Banko, Hirotomo, Sakai-gun, Fukui (JP)
(74) Representative: Viering, Jentschura & Partner

(56) References cited:
- FR-A- 1 515 615
- GB-A- 1 182 355
- US-A- 3 932 566
- CHEMICAL ABSTRACTS, vol. 075, no. 20, 15 November 1971, Columbus, Ohio, US; abstract no. 118944, NAWATA K ET AL 'Flame retardant polyesters' & JP-B-45 037 667 (TEIJIN LTD.) 28 November 1970
- CHEMICAL ABSTRACTS, vol. 073, no. 22, 30 November 1970, Columbus, Ohio, US; abstract no. 110492, KAWADA M ET AL 'Fire-resistant agents' & JP-B-45 005 899 (DAIICHI KOGYO SEIYAKU CO., LTD.) 27 February 1970
- SOVIET INVENTIONS ILLUSTRATED Section Ch, Week D15, 20 May 1981 Derwent Publications Ltd., London, GB; AN 26664 & SU-A-751 813 (SYNTH RESIN RES INS)

## Description

### BACKGROUND OF THE INVENTION

### 1. Field of the Invention

The present invention relates to the use of phosphoryl compounds as flame retardants for polyester-based synthetic fibers which incorporate the phosphoryl compounds in flame retardant finishing, and to polyester-based synthetic fiber materials which employs such flame retardants to impart flame retardancy to fiber materials composed of polyester-based synthetic fibers; particularly, it relates to the use of phosphoryl compounds as flame retardant for polyester-based synthetic fibers which incorporates this type of phosphoryl compound capable of imparting flame retardancy to fiber materials composed of polyester-based synthetic fibers, for excellent durability against laundering and dry cleaning.

### 2. Description of the Related Art

US 3,932,566 discloses phosphonate polymers which are used as flame retardants for polyester materials and GB 1,182,355 (corresponding to FR 1,515,615) discloses phosphorus-containing dicarboxylic esters which are used as flame retardants for polyurethane foams and resins.

Furthermore, Abstract No 118944 of Chemical Abstracts, Vol 75, No 20, November 15, 1971 discloses specific fire retardant polyester resins and Abstract No 110492 of Chemical Abstracts, Vol 73, No 22, November 30, 1970 discloses specific fire-resistant agents used in resins such as polyurethane, polystyrene or polyester resins.

Finally, Abstract No 26664 of Soviet Inventions Illustrated, Section Ch, May 20, 1981 (Derwent Publications Ltd, London, GB) and SU-577289 disclose a cellulose ester film forming composition which includes phosphorus and bromine containing polyester plasticiser and fireproofing agent.

Although fiber materials composed of polyester-based synthetic fibers possess a variety of excellent physical and chemical properties, a common drawback is their ready tendency to combustion, for which reason such polyester-based synthetic fiber materials have traditionally been subjected to finishing treatment for flame retardancy.

To impart flame retardancy to polyester-based synthetic fiber materials by finishing treatment as mentioned above, the prior art teaches the use of halogen compounds as flame retardant compounds, and flame retardancy has been imparted to polyester-based synthetic fiber materials by finishing treatment with such halogen compounds.

Bromine- and chlorine-based compounds are known to be particularly effective as halogen compounds, and post-finishing treatment with these halogen compounds on polyester-based synthetic fiber materials typically involves dissolving a halogen-containing compound such as a halogenated cycloalkane, specifically hexabromocyclododecane, in a solvent, or using a dispersing agent or the like for its emulsification and dispersion in water, in combination with other additives when necessary, to prepare a treatment solution which is then applied to the polyester-based synthetic fiber materials mentioned above by a method such as coating, immersion or spraying.

However, when a halogen compound is applied to a polyester-based synthetic fiber material in this manner for flame retardancy, harmful halide gas is generated in the event of combustion of the polyester-based synthetic fibers, thus having an adverse effect on the environment, and therefore in recent years restrictions have been imposed on such halogen compounds.

In light of this, as alternative flame retardant compounds instead of the above-mentioned halogen compounds, the prior art has also employed phosphorus-based compounds such as phosphoric esters and the like to impart flame retardancy to polyester-based synthetic fiber materials.

Here, the phosphorus-based compounds which have traditionally been in common use as flame retardant compounds have low phosphorus contents and molecular weights usually as low as 200-400, and tend to degrade and volatilize at lower than the inflammation point of polyester-based synthetic fibers; consequently, they cannot impart flame retardancy to the polyester-based synthetic fiber materials as adequately as the above-mentioned halogen compounds, and thus such phosphorus compounds have had to be applied in large amounts in order to impart satisfactory flame retardancy to polyester-based synthetic fiber materials.

However, application of large amounts of these phosphorus compounds tends to cause trouble during the treatment, and when applied in large amounts phosphorus compounds result in an inferior hand of the polyester-based synthetic fiber materials.

Furthermore, when such phosphorus compounds are applied to polyester-based synthetic fiber materials, they migrate through the surface of the polyester-based synthetic fiber materials with the passing of time, and their migration is accompanied by that of disperse dyes added for dyeing of the polyester-based synthetic fiber materials and dissolved in the phosphorus compounds, resulting in the problem known as "bleeding surface" which lowers the color fastness.

It is an object of the present invention to overcome the aforementioned types of problems which occur during finishing treatment of polyester-based synthetic fiber materials to impart flame retardancy.

In other words, in order to impart flame retardancy to polyester-based synthetic fiber materials by post-finishing treatment thereof, the present invention provides the use of phosphoryl compounds which allow sufficiently durable flame retardancy to be easily imparted to polyester-based synthetic fiber materials without the use of halogen compounds and with no loss in the quality of hand of the polyester-based synthetic fiber materials as a result of the flame retardancy, as well as polyester-based synthetic fibers which incorporate the phosphoryl compounds.

The above-mentioned problems are overcome according to the present invention, as a result of the use of phosphoryl compounds represented by the following general formulas (1) to (6).

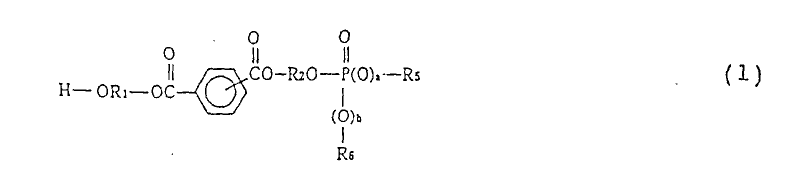

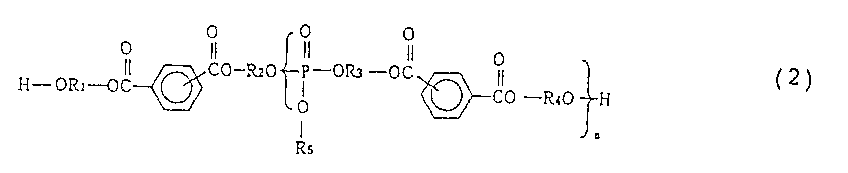

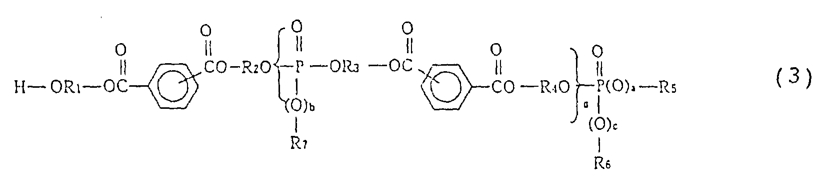

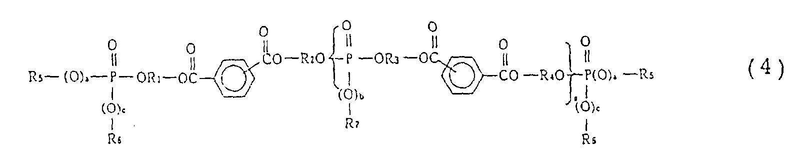

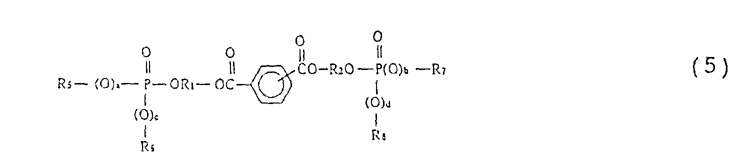

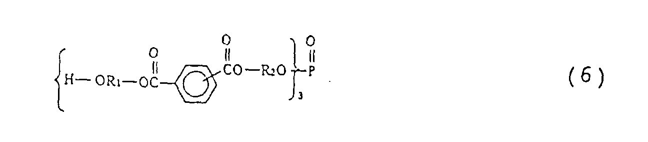

In the above general formulas (1) to (6), R₁, R₂, R₃ and R₄ independently represent alkylene groups of 2 to 6 carbon atoms, preferably 2 or 3 carbon atoms, and they may be the same or different, and either linear or branched. R₅, R₆, R₇ and R₈ independently represent alkyl groups of 1 to 12 carbon atoms or phenyl or substituted phenyl groups, preferably phenyl or tolyl, and they may be the same or different, and either linear or branched. The letters a, b, c and d independently represent either 0 or 1, and they may be the same or different. The letters n independently represent integers from 1 to 6, preferably 1 to 3.

Furthermore, according to the present invention, there are provided polyester-based synthetic fibers which employ at least one type of the phosphoryl compounds represented by the foregoing general formulas (1) to (6). Here, the above-mentioned polyester-based synthetic fibers which may be used include, for example, polyethylene terephthalate, polybutylene terephthalate, polyoxyethoxy benzoate, polyethylene naphthalate, cyclohexanedimethylene terephthalate, as well as these polyesters copolymerized with additional components including dicarboxylic acid components such as isophthalic acid, adipic acid, sulfoisophthalic acid, etc., and diol components such as propylene glycol, butylene glycol, cyclohexanedimethanol, diethylene glycol, etc.

Also, the above-mentioned fiber materials composed of polyester-based synthetic fibers may be in the form of yarns, woven fabrics, knitted fabrics, nonwoven fabrics, or the like.

On the other hand, the phosphoryl compounds represented by the foregoing general formulas (1) to (6) which are used as flame retardant compounds may be obtained by reacting phosphoryl compounds such as phosphorous oxychloride and phenyl dichlorophosphonate, with phthalate ester-type compounds represented by the following general formula and alkyl alcohols or phenols; the molecular weights are usually between 500 and 3500, and they are composed of components with structures similar to the polyester-based synthetic fibers.

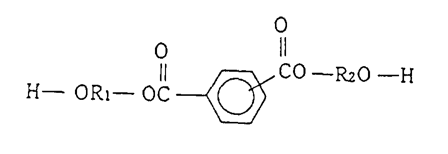

R₁ and R₂ in the above general formula independently represent alkylene groups of 2 to 6 carbon atoms as defined above, and they may be linear or branched.

When a phosphoryl compound is added to a polyester-based synthetic fiber material, usually a dispersion of the phosphoryl compound in water is prepared, the dispersion is applied to the polyester-based synthetic fiber material by the pad-dry-steam method, the pad-steam method, the pad-dry-cure method, etc. at a heat treatment temperature of 100°C or higher, or a package dyeing machine such as a jet dyeing machine, beam dyeing machine or cheese dyeing machine is used to apply the dispersion to the polyester-based synthetic fiber material by immersion heating at a heating temperature of 100°C or higher. The application of the dispersion to the polyester-based synthetic fiber material by the immersion heating method in this manner may be performed before, during or after dyeing of the polyester-based synthetic fiber material, but there are fewer process steps if it is performed during the dyeing, and thus operation efficiency may be improved.

In addition, a dispersant or stabilizer may be used if necessary for the preparation of the dispersion of the phosphoryl compound in water.

Dispersants which may be used include, for example, polyoxyalkylene glycols such as polyoxyethylene glycol, polyoxyethylene polyoxypropylene block polymer, etc., and their fatty acid esters; polyhydric alcohol ethers such as polyoxyethylene pentaerythrit ether, polyoxyethylene sorbit ether, etc., and their fatty acid esters; polyoxyalkylene ether derivatives such as polyoxyethylene alkyl phenyl ether, polyoxyethylene styrylphenyl ether and polyoxyethylene alkyl styrylphenyl ether, etc., and their fatty acid esters or sulfuric acid esters; and aromatic sulfonates and their formaldehyde condensation products. The fatty acids in this case are usually unsaturated or saturated fatty acids of 12-18 carbon atoms.

Also, stabilizers which may be used include, for example, polyvinyl alcohol, methyl cellulose, carboxymethyl cellulose, starch paste, and the like.

When one of the aforementioned phosphoryl compounds is added to a polyester-based synthetic fiber material in the manner described above, if the amount of the phosphoryl compound is less than 1 wt% with respect to the polyester-based synthetic fiber material adequate flame retardancy cannot be imparted to the polyester-based synthetic fiber material, while even with amounts of 10 wt% or greater there is practically no change in the effect of flame retardancy on the polyester-based synthetic fiber material, with the only result being that the quality of its hand is impaired and it becomes hard; therefore, the phosphoryl compound is preferably applied to the polyester-based synthetic fiber material in an amount in the range of 1 to 10 wt%.

According to the present invention, since a flame retardant compound containing at least one type of the phosphoryl compounds represented by the foregoing general formulas (1) to (6) is added to a fiber material composed of polyester-based synthetic fibers to impart flame retardancy to the polyester-based synthetic fiber material, there is provided the same high flame retarding effect as obtained when conventional halogen compounds are used, without the degradation and volatilization of the flame retardant compound at 345-400°C, the inflammation point of polyester-based synthetic fibers, which occur when conventional phosphorus-based compounds are used, while there is also no generation of poisonous gas in the case of combustion of the polyester-based synthetic fiber material, as occurs when halogen compounds are used.

In addition, the above-mentioned phosphoryl compounds added to polyester-based synthetic fiber materials impart flame retardancy which is highly durable against laundering, etc., without progressively migrating through the surface of the polyester-based synthetic fiber materials with the passing of time as occurs in the case of conventionally used phosphorus-based compounds, and therefore disperse dyes do not migrate through the surface of the polyester-based synthetic fiber materials with the flame resistant compound, and the color fastness is not lowered.

The present invention is explained below by way of the following examples which are not intended to be restrictive.

### Example 1

In this example, as the fiber material composed of polyester-based synthetic fibers there was used a woven fabric consisting of a polyethylene terephthalate warp of 75 denier/36 filaments and weft of 105 denier/53 filaments, and having a warp count of 8000 threads/m, a weft count of 3200 threads/m, and a weight of 103 g/m².

On the other hand, to obtain a flame retardant compound to impart flame retardancy to cloths made of this polyethylene terephthalate, in this example, 1.0 mole of phosphorus oxychloride, 1.0 mole of bis(2-hydroxyethyl) terephthalate, 2.0 moles of p-cresol and 0.01 mole of aluminum chloride were simultaneously added to a glass container equipped with a condenser and a heating stirrer, and heated to 150°C in a nitrogen air flow and allowed to react for 6 hours.

After the reaction, the product was washed with water according to a usual method to obtain a flame resistant compound consisting of a mixture of the phosphate ester compounds represented by the following general formulas (7) to (10).

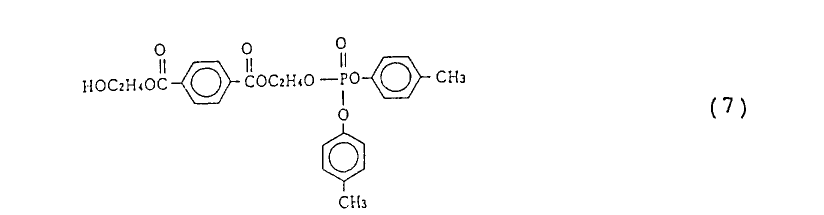

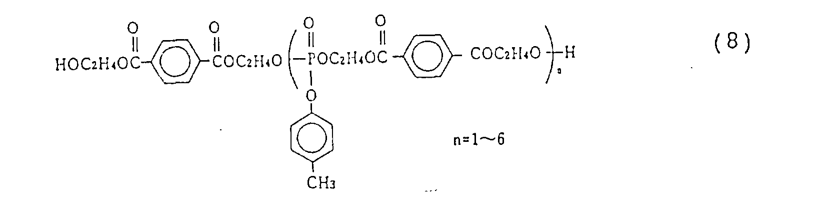

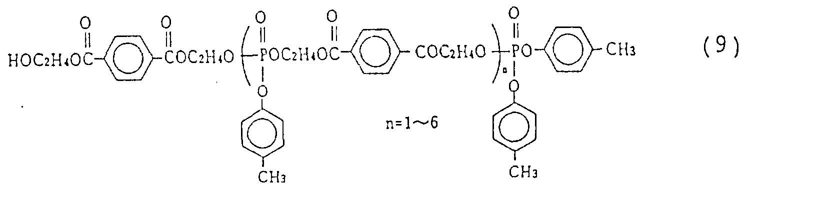

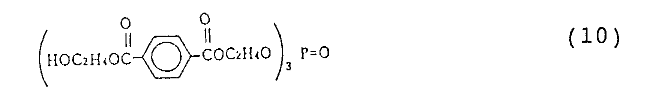

Next, in order to apply the flame retardant compound obtained in the manner described above to the polyethylene terephthalate fabric, in this example, 5 parts by weight of a 20 molar addition product of nonylphenolethylene oxide was added as a dispersant to 45 parts by weight of the flame retardant compound, and 50 parts by weight of water was added thereto while stirring for emulsification, after which 0.2 part by weight of carboxymethyl cellulose was then added as a stabilizer to obtain a milky white emulsion.

Also, a minicolor dyeing machine, manufactured by Techsam Giken Co., was used to finish the above-mentioned fabric with the flame retardant compound-containing emulsion by immersion under the following conditions.

| Treatment conditions | |
|---|---|
| Disperse dye (C.I. Disperse Blue 56) | 1% o.w.f. |
| Flame retardant compound-containing emulsion | 20% o.w.f. |
| 90% acetic acid | 0.3 cc/l |
| Treatment temperature | 130°C |
| Treatment time | 30 minutes |
| Goods to liquor ratio | 1:15 |

Also, the fabric treated in the above manner was washed with warm water and was further subjected to reduction cleaning and finally dried at 110°C for 5 minutes.

### Example 2

In this example, the same type of polyethylene terephthalate fabric as in Example 1 above was used as the fiber material composed of polyester-based synthetic fibers, changing only the flame retardant compound applied to the fabric.

In order to obtain a flame retardant compound to impart flame retardancy to the cloth in this example, 1.0 mole of phenyl dichlorophosphonate, 1.0 mole of bis(2-hydroxyethyl) terephthalate, 1.0 mole of phenol and 0.01 mole of calcium chloride were simultaneously added to a glass container equipped with a condenser and a heating stirrer, and then heated to 150°C in a nitrogen air flow and allowed to react for 3 hours, after which they were further heated to 180°C and allowed to react for 7 hours. After the reaction, the product was washed with water according to a usual method to obtain a flame retardant compound consisting of a mixture of the phosphate ester compounds represented by the following general formulas (11) to (15).

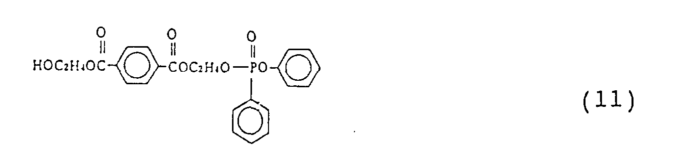

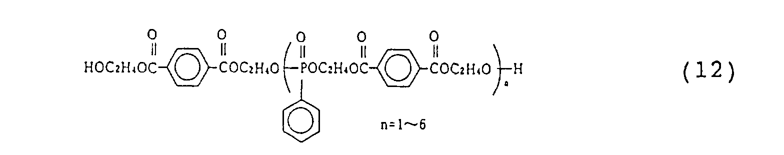

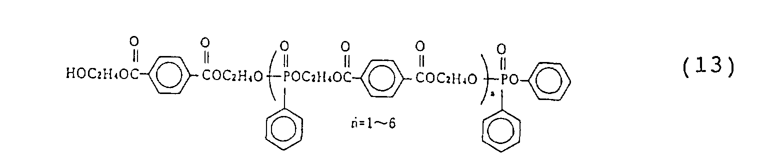

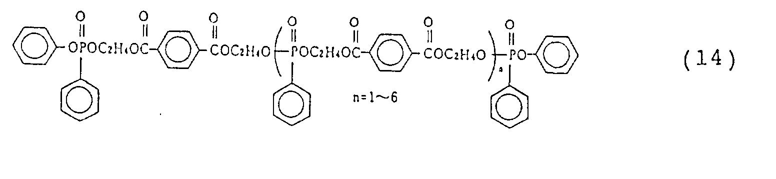

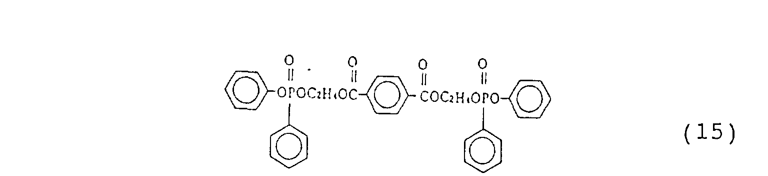

The mixture of flame retardant compounds represented by the above general formulas (11) to (15) was then applied to the polyethylene terephthalate fabric of the type described above, in exactly the same manner as in Example 1.

### Example 3

In this example as well, the same type of polyethylene terephthalate fabric as in Example 1 above was used as the fiber material composed of polyester-based synthetic fibers, changing only the flame retardant compound applied to the cloth.

In order to obtain a flame retardant compound to impart flame retardancy to the fabric in this example, 1.0 mole of phenyl dichlorophosphonate, 1.0 mole of bis(2-hydroxyethyl) terephthalate, 1.0 mole of p-cumylphenol and 0.01 mole of calcium chloride were simultaneously added to a glass container equipped with a condenser and a heating stirrer, and heated to 150°C in a nitrogen air flow and allowed to react for 3 hours, after which they were further heated to 180°C and allowed to react for 7 hours. After the reaction, the product was washed with water according to a usual method to obtain a flame retardant compound consisting of a mixture of the phosphate ester compounds represented by the following general formulas (16) to (20).

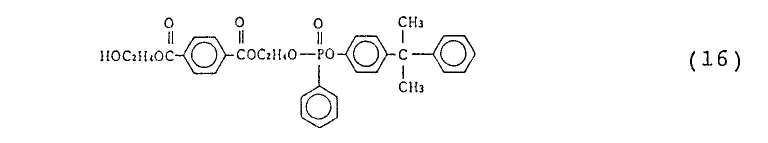

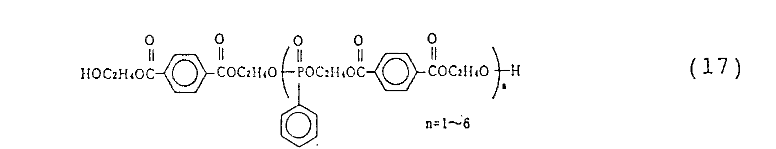

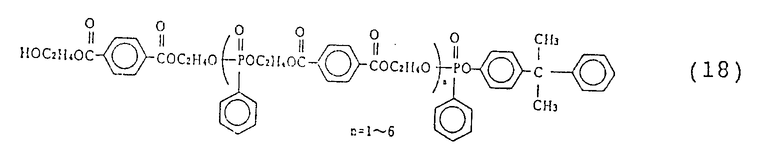

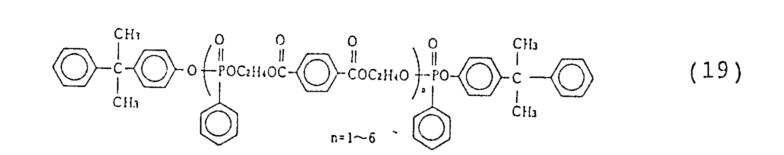

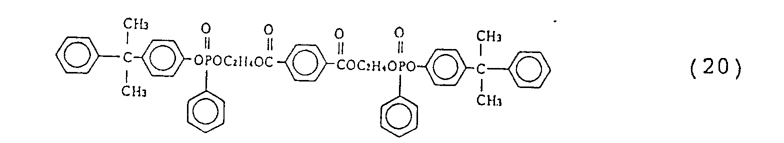

The mixture of flame retardant compounds represented by the above general formulas (16) to (20) was then applied to the polyethylene terephthalate fabric of the type described above, in exactly the same manner as in Example 1.

### Example 4

In this example as well, the same type of polyethylene terephthalate fabric as in Example 1 above was used as the fiber material composed of polyester-based synthetic fibers, changing only the flame retardant compound applied to the fabric.

In order to obtain a flame retardant compound to impart flame retardancy to the cloth in this example, 1.0 mole of phosphorus oxychloride, 2.0 moles of bis(2-hydroxyethyl) isophthalate, 1.0 mole of p-isopropylphenol and 0.01 mole of aluminum chloride were simultaneously added to a glass container equipped with a condenser and a heating stirrer, and heated to 150°C in a nitrogen air flow and allowed to react for 6 hours, after which the product was washed with water according to a usual method to obtain a flame retardant compound consisting of a mixture of the phosphate ester compounds represented by the following general formulas (21) to (25).

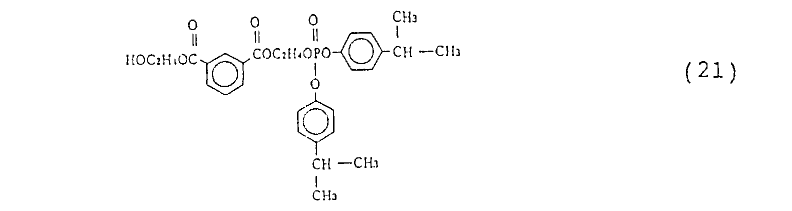

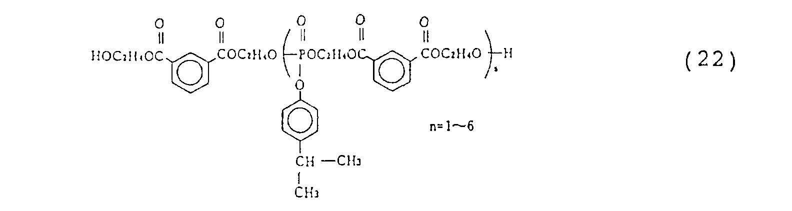

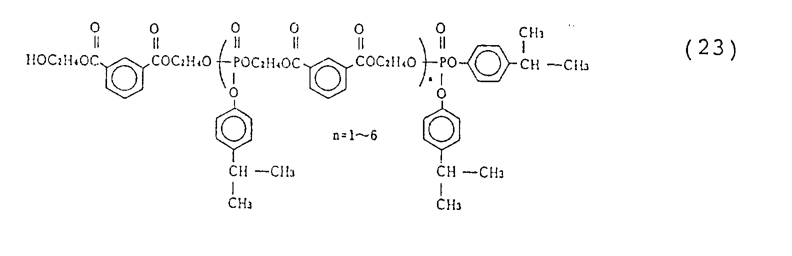

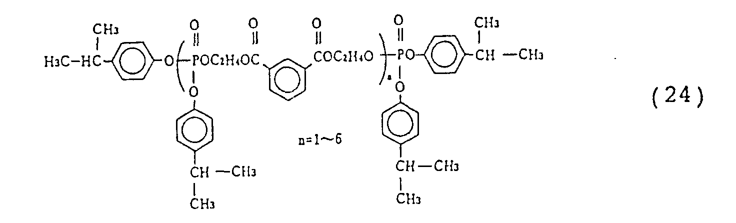

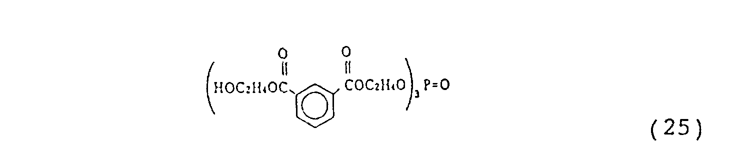

The mixture of flame retardant compounds represented by the above general formulas (21) to (25) was then applied to the polyethylene terephthalate fabric of the type described above, in exactly the same manner as in Example 1.

### Comparison Example 1

In this comparison example as well, the same type of polyethylene terephthalate fabric as in the previous examples was used as the fiber material composed of polyester-based synthetic fibers, and only the flame retardant compound applied to the fabric was changed to the commonly used phosphoric compound tris(β-chloroethyl) phosphate.

This flame retardant compound was then applied to the polyethylene terephthalate fabric in exactly the same manner as in the previous examples.

### Comparison Example 2

In this comparison example as well, the same type of polyethylene terephthalate fabric as in the previous examples was used as the fiber material composed of polyester-based synthetic fibers, and only the flame retardant compound applied to the fabric was changed to the commonly used phosphoric compound tricresyl phosphate.

This flame retardant compound was then applied to the polyethylene terephthalate fabric in exactly -the same manner as in the previous examples.

### Comparison Example 3

In this comparison example as well, the same type of polyethylene terephthalate fabric as in the previous examples was used as the fiber material composed of polyester-based synthetic fibers, and the flame retardant compound applied to the fabric was changed to the commonly used halogen compound hexabromocyclododecane.

Also, to 45 parts by weight of this hexabromocyclododecane there were added 5 parts by weight of a 20 molar addition product of nonylphenolethylene oxide as a dispersant and 50 parts by weight of water, and a sand mill was used to produce finely divided particles for dispersion, after which 0.2 part by weight of carboxymethyl cellulose was further added as a stabilizer to obtain the dispersion.

This dispersion was then applied to the polyethylene terephthalate fabric in exactly the same manner as in Example 1 above.

Next, the fabrics treated with flame retardant compounds as described in Examples 1 to 4 and Comparison Examples 1 to 3, and an unfinished fabric which had not been treated with a flame retardant compound, were examined to determine their flame retardancy and dye bleeding.

To determine the flame retardancy of each of the above-mentioned fabrics, each fabric was examined in its initially obtained state, in the state after washing with water by the laundering method specified by JIS L-1042, and in the state after dry cleaning by the dry cleaning method specified by JIS L-1018, selecting 3 different locations for the tests, and the flame retardancy of each fabric was determined by the testing method for flammability of clothes specified by JIS L-1091 Method D, the results of which are listed in Table 1.

Also, in order to determine the dye bleeding of each of the above-mentioned fabrics, each initially obtained fabric and each fabric allowed to stand for 7 days at a temperature of 70°C and a humidity of 95% as treatment for acceleration of the daily change using a jungle tester, were measured for dye bleeding feature according to the testing method for color fastness to water specified by JIS L-0846, the results of which are listed in Table 2.

**Table 1**

| | Flame retardancy (Flame contact times) | | |
|---|---|---|---|
| | Initial | After laundering | After dry cleaning |
| Example 1 | 5, 4, 4 | 5, 4, 4 | 4, 5, 4 |
| Example 2 | 5, 5, 4 | 5, 5, 5 | 5, 4, 4 |
| Example 3 | 5, 4, 4 | 4, 5, 4 | 5, 4, 4 |
| Example 4 | 5, 4, 4 | 4, 4, 5 | 5, 5, 4 |
| Comp. Ex. 1 | 3, 3, 2 | 2, 3, 3 | 2, 3, 2 |
| Comp. Ex. 2 | 2, 1, 2 | 1, 2, 1 | 2, 2, 1 |
| Comp. Ex. 3 | 4, 4, 4 | 5, 4, 4 | 5, 4, 4 |
| Unfinished | 1, 1, 1 | 1, 1, 1 | 1, 1, 1 |

**Table 2**

| | Color fastness to water | |
|---|---|---|
| | Initial | After standing |
| Example 1 | 4 | 4 |
| Example 2 | 4 | 4 |
| Example 3 | 4 | 4 |
| Example 4 | 4 | 4 |
| Comp. Ex. 1 | 3 | 2 |
| Comp. Ex. 2 | 4 | 2 |
| Comp. Ex. 3 | 4 | 4 |
| Unfinished | 4-5 | 4-5 |

As is clear from the results shown in Table 1, the fabrics in Examples 1 to 4 to which had been applied the phosphoryl compounds represented by chemical formulas (7) to (25) as flame retardant compounds, though being non-halogen compounds, exhibited very excellent flame retardancy either equal to or exceeding that of the fabric of Comparison Example 3 to which had been applied the halogen compound hexabromocyclododecane as the flame retardant compound, in all three initial, laundered and dry cleaned states, and there was no loss in the quality of hand of the fabrics by application of these flame retardant compounds.

In contrast, the fabrics of Comparison Examples 1 and 2, which had been treated with conventionally used phosphorus-based compounds as flame retardant compounds, had poorer flame retardancy than the fabrics of Examples 1 to 4 in all three initial, laundered and dry cleaned states.

In addition, as is clear from the results shown in Table 2, the fabrics of Comparison Examples 1 and 2 had stronger dye bleeding feature and poorer color fastness, while the fabrics of Examples 1 to 4, which had been treated with the flame resistant compounds composed of the aforementioned phosphoryl compounds, had low dye bleeding feature and satisfactory color fastness, similar to the cloth of Comparison Example 3 which had been treated with the halogen-containing flame retardant compound.

Furthermore, since the fabrics obtained in Examples 1 to 4 did not employ halogen compounds as the flame retardant compounds, there was no generation of harmful halogen gas during combustion as occurred in the case of the fabric of Comparison Example 3 which had been treated with the halogen-containing flame retardant compound.

As mentioned above, according to the present invention, since at least one of the phosphoryl compounds represented by the foregoing general formulas (1) to (6) is used to impart flame retardancy to a fiber material composed of polyester-based synthetic fibers in the form of a flame retardant containing at least one type of the phosphoryl compounds represented by general formulas (1) to (6) applied to the polyester-based synthetic fiber material, there is provided the same high flame retarding effect on polyester-based synthetic fiber materials as is obtained when conventional halogen compounds are used as flame retardant compounds, without the degradation and volatilization of the flame retardant compound at lower than the inflammation point of the polyester-based synthetic fibers, which occur when conventional phosphorus-containing compounds are used as flame retardants, making it possible to obtain highly flame-retardant polyester-based synthetic fiber materials.

Furthermore, the above-mentioned phosphoryl compounds added to polyester-based synthetic fiber materials impart flame retardancy thereto which is highly durable against laundering, etc., without progressively migrating through the surface of the polyester-based synthetic fiber materials with the passing of time as occurs in the case of conventionally used phosphorus-containing compounds, and therefore disperse dyes do not migrate through the surface of the polyester-based synthetic fiber materials together with the flame retardant compound, and the color fastness is not lowered.

Moreover, since according to the present invention halogen compounds are not used as the flame retardants, there is no generation of poisonous halogen gas in the event of combustion of the flame retardant-applied polyester-based synthetic fiber materials, and thus there is no adverse effect on the environment.

## Claims

1. Use of at least one of the phosphoryl compounds represented by the general formulae (1) to (6) as a flame retardant for post-finishing treatment of a polyester-based synthetic fiber material: 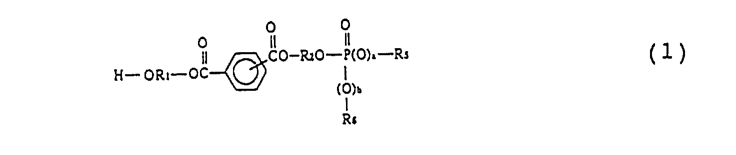 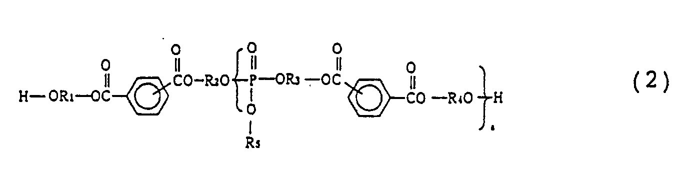 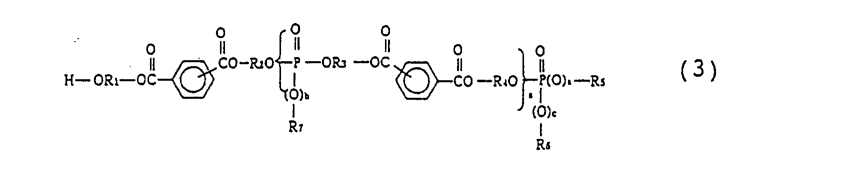 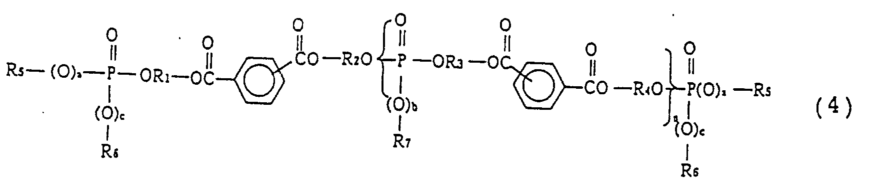 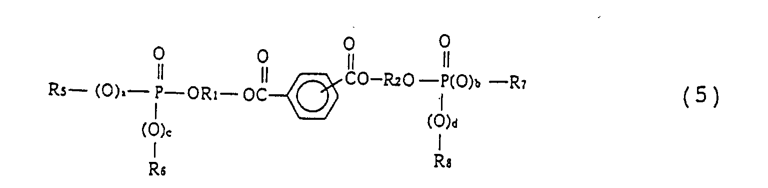 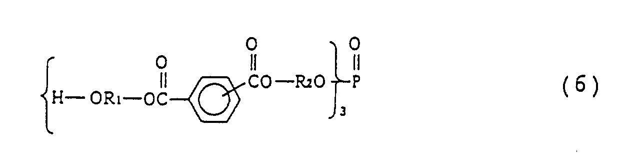 wherein R₁, R₂, R₃, and R₄ independently represent alkylene groups of 2 to 6 carbon atoms, and they may be the same or different and either linear or branched; R₅, R₆, R₇ and R₈ independently represent alkyl groups of 1 to 12 carbon atoms or phenyl groups or substituted phenyl groups, and they may be the same or different and either linear or branched; the letters a, b, c and d independently represent either 0 or 1 and they may be the same or different; and the letters n independently represent integers from 1 to 6.

2. The polyester-based synthetic fiber material, treated in a post-finishing treatment with at least one of the phosphoryl compounds represented by the general formulae (1) to (6) as defined in claim 1.

## Patentansprüche

1. Verwendung von wenigstens einer der Phosphorylverbindungen, die durch die allgemeinen Formeln (1) bis (6) dargestellt ist, als ein Brandschutzmittel zur Nachfertigungsbehandlung eines auf Polyester basierenden, synthetischen Fasermaterials: 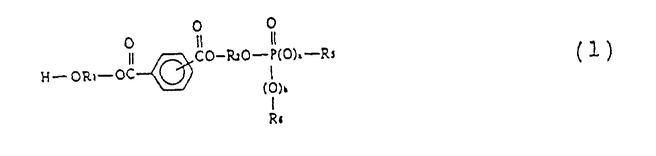 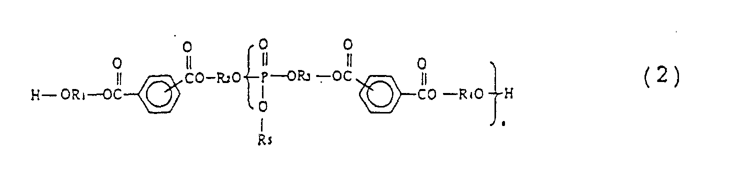 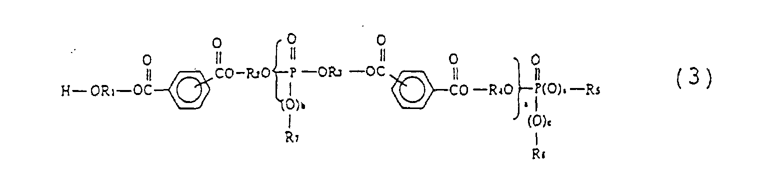 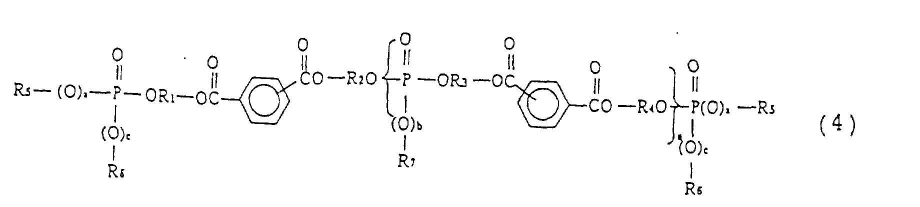 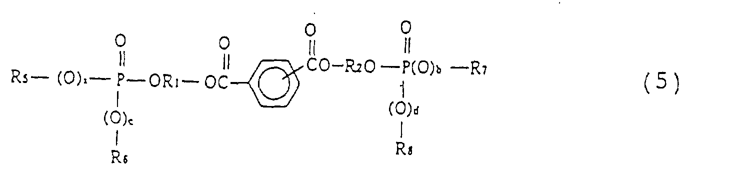 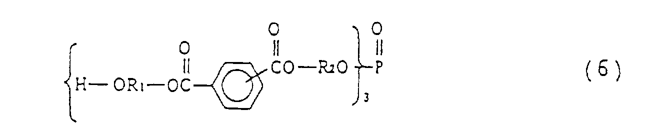 wobei R₁, R₂, R₃ und R₄ unabhängig Alkylengruppen mit 2 bis 6 Kohlenstoffatomen darstellen, und sie können gleich oder verschieden und entweder linear oder verzweigt sein; R₅, R₆, R₇ und R₈ unabhängig Alkylgruppen mit 1 bis 12 Kohlenstoffatomen oder Phenylgruppen oder substitutierten Phenylgruppen darstellen, und sie können gleich oder verschieden und entweder linear oder verzweigt sein; die Buchstaben a, b, c und d unabhängig entweder 0 oder 1 darstellen und sie können gleich oder verschieden sein; und die Buchstaben n unabhängig Ganzzahlen von 1 bis 6 darstellen.

2. Das auf Polyester basierende, synthetische Fasermaterial, das in einer Nachfertigungsbehandlung mit mindestens einem der Phosphorylverbindungen behandelt wird, die durch die allgemeinen Formeln (1) bis (6) wie im Anspruch 1 definiert dargestellt sind.

## Revendications

1. Utilisation d'au moins l'un des composés phosphorylés représentés par les formules générales (1) à (6) en tant que retardateur de flamme pour le traitement de post-finissage d'un matériau de fibres synthétiques à base de polyester : 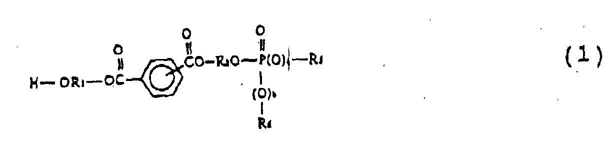 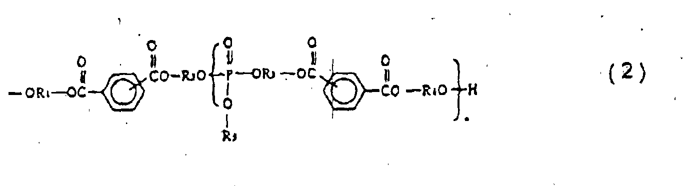 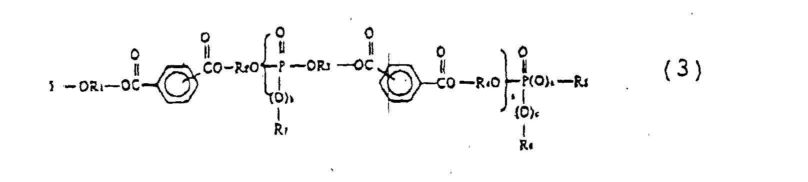 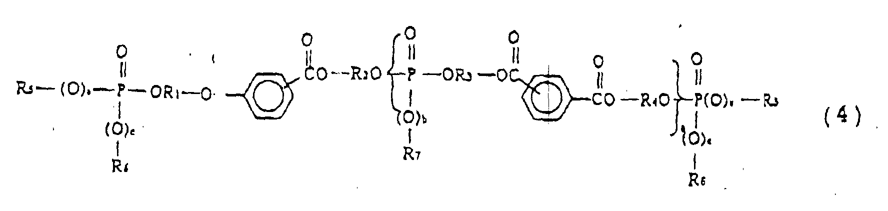 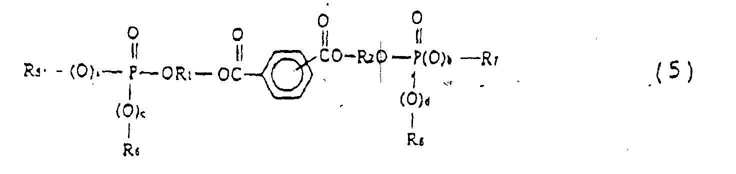 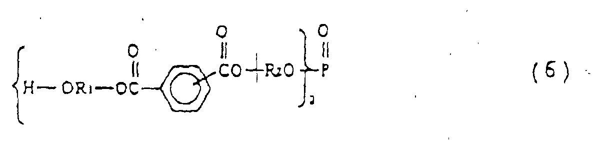 Où R₁, R₂, R₃ et R₄ représentent chacun indépendamment des autres des groupes alkylène ayant de 2 à 6 atomes de carbone, et ils peuvent être identiques ou différents, avec une chaîne droite ou ramifiée ; R₅, R₆, R₇ et R₈ représentent chacun indépendamment des autres des groupes alkyle ayant de 1 à 12 atomes de carbone ou des groupes phényle ou des groupes phényle substitués, et ils peuvent être identiques ou différents, avec une chaîne droite ou ramifiée ; les lettres a, b, c et d représentent chacune indépendamment des autres 0 ou 1, et elles peuvent avoir des vateurs identiques ou différentes ; et les lettres n représentent chacune indépendamment des autres des entiers de 1 à 6.

2. Matériau de fibres synthétiques à base de polyester, traité dans un traitement de post-finissage avec au moins l'un des composés phosphorylés représentés par les formules générales (1) à (6) selon la revendication 1.
